# EUROPÄISCHE PATENTSCHRIFT

(11) **EP 3 962 701 B1**
(45) Veröffentlichungstag und Bekanntmachung des Hinweises auf die Patenterteilung: **29.03.2023**
(21) Anmeldenummer: 20725072.1
(22) Anmeldetag: 28.04.2020
(51) Int. Cl.: B25J 9/00

(54) **POSITIONIERVORRICHTUNG**
POSITIONING DEVICE
DISPOSITIF DE POSITIONNEMENT

(30) Priorität: 29.04.2019 DE 102019111026
(43) Veröffentlichungstag der Anmeldung: 09.03.2022
(73) Patentinhaber: Physik Instrumente (PI) GmbH & Co. KG, 76228 Karlsruhe (DE)
(72) Erfinder: HUBER, Stephanie, 76228 Karlsruhe (DE); RUDOLF, Christian, 76307 Karlsbad (DE); MARTH, Harry, 76337 Waldbronn (DE)
(74) Vertreter: Grünecker Patent- und Rechtsanwälte PartG mbB
(86) Internationale Anmeldenummer: PCT/DE2020/100343
(87) Internationale Veröffentlichungsnummer: WO 2020/221396

(56) Entgegenhaltungen:
- CN-A- 103 486 413
- CN-A- 108 453 704
- CN-C- 100 585 743
- LEGNANI G ET AL: "A new isotropic and decoupled 6-DoF parallel manipulator", MECHANISM AND MACHINE THEORY, Bd. 58, 1. Dezember 2012 (2012-12-01), Seiten 64-81, XP028941166, ISSN: 0094-114X, DOI: 10.1016/J.MECHMACHTHEORY.2012.07.008

## Beschreibung

Die Erfindung betrifft eine Positioniervorrichtung gemäß den Ansprüchen 1 bis 5.

Aus der Druckschrift CN 100585743 C ist eine gattungsgemäße Positioniervorrichtung bekannt. Eine gelenkige und die notwendigen Freiheitsgrade realisierende Verbindung zwischen den Antriebsbeinen und der Basis bzw. dem Positionierelement wird hier über ein sogenanntes Notch-type-Festkörpergelenk umgesetzt. Diese Art von Festkörpergelenk erlaubt Schwenk- bzw. Kippbewegungen der Antriebsbeine in beliebig viele Richtungen. Zudem erlaubt ein solches Festkörpergelenk auch Rotationen des Antriebsbeins um seine Längsachse, wenngleich in einem geringeren Maße als die vorstehend erwähnten Schwenk- bzw Kippbewegungen. Die Anzahl von Freiheitsgraden, die das in der CN 100585743 C offenbarte Festkörpergelenk erlaubt und die zu einem mechanisch unterbestimmten System führt, ist für bestimmte Anwendungen, insbesondere solchen, wo es auf hohe Positioniergenauigkeit bei großen Hüben oder Verstellwegen der Antriebsbeine bzw. des Positionierelements ankommt, jedoch nachteilig.

Der vorliegenden Erfindung liegt also die Aufgabe zugrunde, eine Positioniervorrichtung bereitzustellen, die mechanisch eindeutig bestimmt ist und die auch bei großen Hüben der Antriebsbeine eine hohe Positioniergenauigkeit erlaubt.

Diese Aufgabe wird gelöst durch eine Positioniervorrichtung gemäß Anspruch 1, wobei die sich daran anschließenden Unteransprüche wenigstens zweckmäßige Weiterbildungen beschreiben.

Es wird demnach ausgegangen von einer Positioniervorrichtung mit einer ortsfesten Basis und einem gegenüber der Basis bezüglich sechs Freiheitsgraden relativ verstellbaren Positionierelement, wobei das Positionierelement über wenigstens drei Paare längenveränderlicher und elektrisch angetriebener Beinelemente mit der Basis gekoppelt ist. Jedes der wenigstens sechs Beinelemente ist hierzu an seinen beiden Enden über ein Gelenkelement mit der Basis und dem Positionierelement verbunden. Die drei Paare von Beinelementen sind so zueinander angeordnet, dass jeweils ein Beinpaar durch ein anderes Beinpaar hindurchragt, und dabei jedes Beinpaar senkrecht zu den jeweils anderen Beinpaaren angeordnet ist.

Erfindungswesentlich weisen die beiden einem Beinelement zugeordneten Gelenkelemente jeweils ausschließlich zwei senkrecht zueinander angeordnete Drehachsen auf, so dass die Gelenkelemente Schwenk- oder Kippbewegungen des jeweiligen Beinelements, an welchem die Gelenkelemente angeordnet sind, in genau zwei senkrecht zueinander stehenden Ebenen, die durch eine Längsachse, vorzugsweise durch die zentrale Längsachse, des Beinelements verlaufen, erlauben und gleichzeitig eine Rotationsbewegung um eine Längsachse, bevorzugt um die zentrale Längsachse, des Beinelements wirkungsvoll unterbinden bzw. verhindern.

Auf diese Weise ist sichergestellt, dass jedes Beinelement ausschließlich Schwenkbewegungen in zwei senkrecht zueinander angeordneten Ebenen ausführen kann. Zudem ist sichergestellt, dass eine Rotation dieser Beinelemente um ihre jeweilige Längsachse verhindert ist, wodurch insbesondere die Verwendung von rotatorischen Antrieben für die längenveränderlichen Beinelemente ermöglicht wird, ohne dass zusätzliche Vorkehrungen zur Verhinderung einer Beinelementdrehung aufgrund von Antriebsdrehmomenten getroffen werden müssen.

Es kann von Vorteil sein, dass das Gelenkelement als Kardangelenk oder als Kreuzgelenk ausgeführt ist. Derart ausgeführte Gelenkelemente sind in zahlreichen Varianten und Güteklassen kommerziell verfügbar und somit relativ kostengünstig einsetzbar. Sie erlauben insbesondere im Vergleich zu Festkörpergelenken bei gleicher Tragfähigkeit deutlich größere Drehbzw. Schwenkwinkel.

Es kann ebenfalls von Vorteil sein, dass sich die Drehachsen des Gelenkelements nicht schneiden bzw. nicht gegenseitig durchdringen. Daraus resultiert eine hohe Gelenksteifigkeit mit einer entsprechend steifen Lagerung der Beinelemente.

Es kann zudem von Vorteil sein, dass das Gelenkelement als Kugelgelenk mit einem kugelförmigen Lagerkopf und einer dazu komplementär geformten Lagerhülse, in welcher der Lagerkopf angeordnet ist, ausgebildet ist, wobei zwischen dem Lagerkopf und der Lagerhülse ein stiftförmiges Blockierelement angeordnet ist, das in eine nutförmige Ausnehmung des Lagerkopfs hineinragt und mit dieser zusammenwirkt und gleichzeitig in einer Ausnehmung der Lagerhülse gelagert ist.

Es kann weiterhin von Vorteil sein, dass jedes Beinelement einen Spindelantrieb zur Realisierung einer Längenänderung aufweist. Dadurch können besonders große Stellwege der Beinelemente realisiert werden.

Vorteile und Zweckmäßigkeiten der Erfindung werden deutlicher aus der nachfolgenden Beschreibung bevorzugter Ausführungsbeispiele anhand der Figuren. Es zeigen:
Figur 1: Erfindungsgemäße Positioniervorrichtung in perspektivischer Ansicht (Positionierelement weggelassen)
Figur 2: Erfindungsgemäße Positioniervorrichtung in perspektivischer Ansicht
Figur 3: Gelenkelement in Form eines Kardangelenks einer erfindungsgemäßen Positioniervorrichtung in perspektivischer Darstellung
Figur 4 a-c: Unterschiedliche Ansichten eines Gelenkelements in Form eines Kreuzgelenks einer erfindungsgemäßen Positioniervorrichtung
Figur 5 a-c: Unterschiedliche Ansichten eines Gelenkelements in Form eines Kugelgelenks einer erfindungsgemäßen Positioniervorrichtung

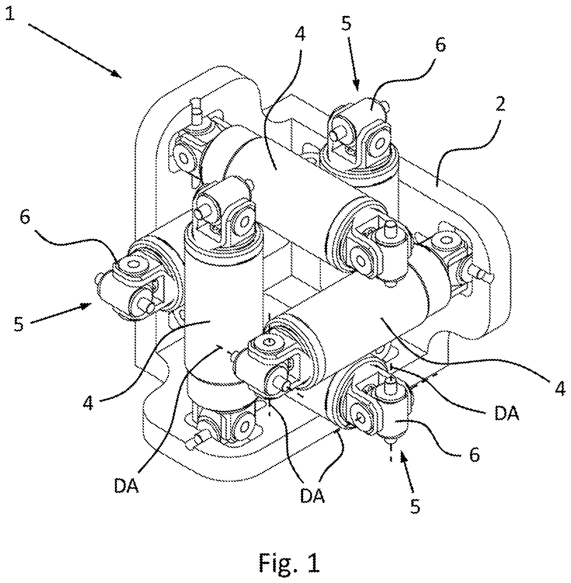

Figur 1 zeigt in einer perspektivischen Darstellung eine Ausführungsform einer erfindungsgemäßen Positioniervorrichtung 1. Zur Verdeutlichung des inneren Aufbaus wurde das Positionierelement der Positioniervorrichtung in Figur 1 weggelassen.

An einer ortsfesten Basis 2, welche drei derart aneinander angrenzende Seitenwände aufweist, so dass eine Seitenwand jeweils die beiden anderen Seitenwände kontaktiert, wobei die Seitenwände paarweise jeweils senkrecht zueinander angeordnet sind, sind insgesamt sechs in ihrer Länge veränderliche Beinelemente 4 angeordnet, wobei die Beinelemente jeweils über ein Gelenkelement 5 in Form eines Kardangelenks 6 mit dem jeweiligen Ende mit der Basis 2 verbunden sind. An jeder der drei Seitenwände der Basis 2 sind zwei parallel zueinander ausgerichtete und identisch ausgeführte Beinelemente 4 angeordnet, welche jeweils ein Paar bilden. Die somit drei Paare von Beinelementen 4 (im Folgenden ,Beinpaare') sind dabei so zueinander angeordnet, dass jeweils ein Beinpaar durch ein anderes Beinpaar hindurchragt, und jedes Beinpaar senkrecht zu den jeweils anderen Beinpaaren angeordnet ist. Aufgrund dieser Anordnung resultiert eine sehr platzsparende Konfiguration der Positioniervorrichtung, wobei alle sechs Beinelemente in dem durch die drei Seitenwände aufgespannten würfelförmigen Raum der Basis 2 Platz finden.

Jedes Beinelement 4 weist an seinem der Basis 2 abgewandten Ende ein Gelenkelement 5 in Form eines Kardangelenks 6 auf, welches identisch ausgebildet ist zu dem Gelenkelement 5, das an dem der Basis 2 zugewandten Ende des jeweiligen Beinelements 4 angeordnet ist und welches für eine Verbindung des Beinelements 4 mit der Basis 2 sorgt. Das an dem der Basis 2 abgewandten Ende des Beinelements 4 angeordnete Gelenkelement 5 ist dabei zur Verbindung mit dem in Figur 1 nicht gezeigten Positionierelement der Positioniervorrichtung 1 vorgesehen.

Die jeweils als Kardangelenk 6 ausgebildeten Gelenkelemente 5 weisen zwei senkrecht zueinander angeordnete Drehachsen DA auf, wobei sich die Drehachsen nicht schneiden bzw. durchdringen. Anders ausgedrückt liegen die beiden Drehachsen DA eines Kardangelenks nicht in einer gemeinsamen Ebene.

Jedes der längenveränderlichen Beinelemente 4 weist in seinem Inneren einen elektrischen Antrieb in Form eines Spindelmotors auf (in Fig.1 nicht erkennbar). Durch synchrones Ansteuern der Beinelemente eines Beinpaares bzw. bei gleichsinniger Längenänderung der beiden Beinelemente eines Beinpaares erfährt das Positionierelement eine Translationsbewegung entlang einer entsprechenden Raumachse, während das Ansteuern nur eines der beiden Beinelemente eines Beinpaares bzw. ein Ansteuern der Beinelemente eines Beinpaares, das zu entgegengesetzten Längenänderungen bei den beiden Beinelementen führt, zu einer entsprechenden Rotation des Positionierelements führt. Selbstverständlich sind Überlagerungen der durch die verschiedenen Beinpaare am Positionierelement hervorgerufenen Bewegungen (d.h. von Translationen und/oder Rotationen) möglich.

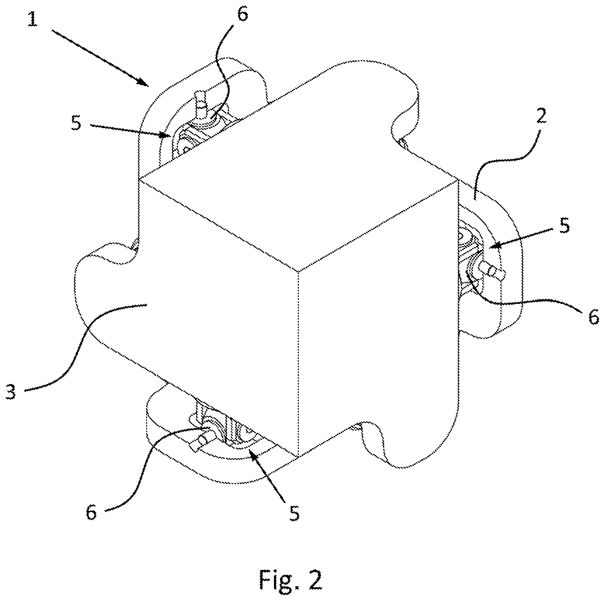

Figur 2 zeigt die Positioniervorrichtung 1 gemäß Figur 1 zusammen mit dem Positionierelement 3. Das Positionierelement 3 weist eine nahezu identische Form zu der Basis 2 auf, d.h. es besitzt drei Seitenwände, die derart aneinander angrenzen, dass eine Seitenwand jeweils die beiden anderen Seitenwände kontaktiert, wobei die Seitenwände paarweise jeweils senkrecht zueinander angeordnet sind und somit ebenfalls einen würfelförmigen Raum aufspannen. Die Basis 2 und das Positionierelement 3 sind dabei so zueinander angeordnet, dass beide zusammen nahezu eine Würfelform ergeben. Die somit äußerst kompakten Abmessungen der Positioniervorrichtung resultieren, wie vorstehend bereits ausgeführt, aus der spezifischen, sich gegenseitig durchdringenden Anordnung der Beinpaare zueinander.

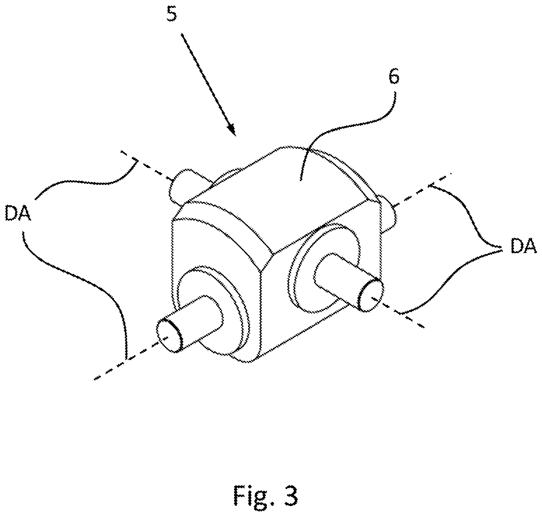

Figur 3 zeigt ein Gelenkelement 5 einer erfindungsgemäßen Positioniervorrichtung in Form eines Kardangelenks 6, wobei die beiden senkrecht zueinander angeordneten Drehachsen DA nicht in der gleichen Ebene verlaufen und sich somit nicht gegenseitig durchdringen. Mit anderen Worten: die beiden Drehachsen des Kardangelenks 6 kreuzen sich zwar, schneiden bzw. durchdringen sich aber nicht.

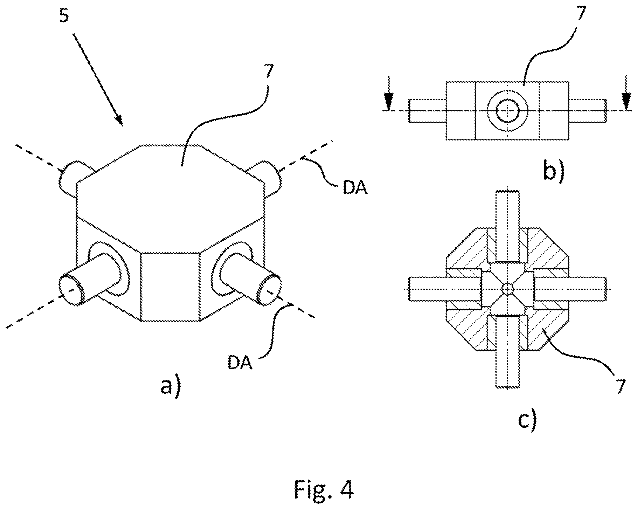

Die Figuren 4 a) bis c) zeigen eine weitere Ausführungsform eines Gelenkelements 5 der erfindungsgemäßen Positioniervorrichtung in Form eines Kreuzgelenks 7 in unterschiedlichen Ansichten (perspektivische Ansicht in Fig. 4a), Seitenansicht in Fig. 4b) und Schnittdarstellung gemäß Fig. 4b) in Fig. 4c)). Bei dieser Ausführungsform schneiden sich die beiden senkrecht zueinander angeordneten Drehachsen DA bzw. sie durchringen sich gegenseitig.

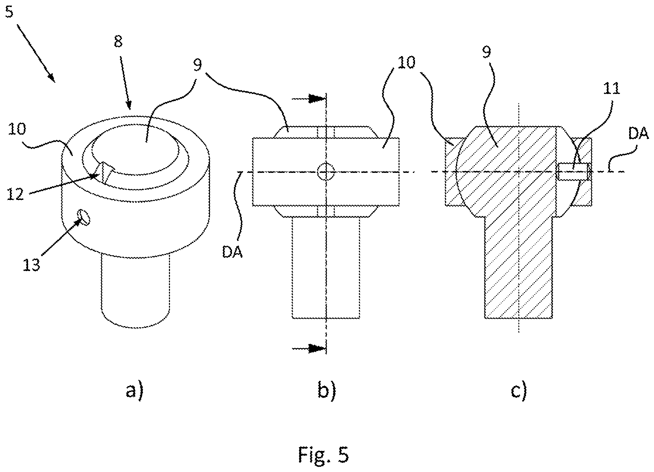

Die Figuren 5 a) bis c) zeigen eine weitere Ausführungsform eines Gelenkelements 5 der erfindungsgemäßen Positioniervorrichtung in Form eines speziellen Kugelgelenks 8. Das Kugelgelenk umfasst einen kugelförmigen Lagerkopf 9 und eine dazu komplementär geformte Lagerhülse 10, in welcher der Lagerkopf 9 angeordnet ist. Der Lagerkopf 9 weist eine nutförmige Ausnehmung 12 auf, während die Lagerhülse eine Ausnehmung 13 besitzt. Ein stiftförmiges und rundes Blockierelement 11 ist mit einem seiner Enden in der Ausnehmung 13 gelagert bzw. gehaltert, während das diesem gegenüberliegende Ende des stiftförmigen Blockierelements 11 in die nutförmige Ausnehmung 12 des Lagerkopfs 9 hineinragt und mit diesem zusammenwirkt.

Aufgrund des stiftförmigen Blockierelements 11 und dessen Zusammenwirken mit der nutförmigen Ausnehmung 12 in dem Lagerkopf 9 bzw. mit der Ausnehmung 13 in der Lagerhülse 10 sind die vielen möglichen Freiheitsgrade des Kugelgelenks 8 stark eingeschränkt. So erlaubt das Zusammenwirken des stiftförmigen Blockierelements 11 mit der nutförmigen Ausnehmung 12 eine Kippbewegung eines mit dem Kugelgelenk 8 verbundenen Beinelements in einer Ebene, die durch die entsprechende Ausrichtung der nutförmigen Ausnehmung 12 definiert ist. Die Ausrichtung der entsprechenden Drehachse DA verläuft hierbei senkrecht zu einer Längsachse des stiftförmigen Blockierelements 11.

Gleichzeitig erlaubt das Zusammenwirken des stiftförmigen Blockierelements 11 mit der nutförmigen Ausnehmung 12 eine Kippbewegung eines mit dem Kugelgelenk 8 verbundenen Beinelements um eine Drehachse DA, welche parallel zu einer Längsachse des stiftförmigen Blockierelements 11 verläuft bzw. mit der zentralen Längsachse des stiftförmigen Blockierelements 11 zusammenfällt.

Die spezielle Ausführungsform des Kugelgelenks gemäß Fig. 5 resultiert also in zwei verbleibenden Freiheitsgraden, während alle anderen möglichen Freiheitsgrade des Kugelgelenks unterbunden sind.

### Bezugszeichenliste

- 1: Positioniervorrichtung
- 2: Basis
- 3: Positionierelement
- 4: Beinelement
- 5: Gelenkelement
- 6: Kardangelenk
- 7: Kreuzgelenk
- 8: Kugelgelenk
- 9: Lagerkopf
- 10: Lagerhülse
- 11: stiftförmiges Blockierelement
- 12: nutförmige Ausnehmung (des Lagerkopfs 9)
- 13: Ausnehmung (der Lagerhülse 10)
- DA: Drehachse

## Patentansprüche

1. Positioniervorrichtung (1) mit einer Basis (2) und einem gegenüber der Basis bezüglich sechs Freiheitsgraden relativ verstellbaren Positionierelement (3), wobei das Positionierelement über wenigstens drei Paare längenveränderlicher und elektrisch angetriebener Beinelemente (4) mit der Basis gekoppelt ist, und jedes der wenigstens sechs Beinelemente an seinen beiden Enden über ein Gelenkelement (5) mit der Basis und dem Positionierelement verbunden ist, wobei jeweils ein Beinpaar durch ein anderes Beinpaar hindurchragt und jedes Beinpaar senkrecht zu den jeweils anderen Beinpaaren angeordnet ist, **dadurch gekennzeichnet, dass** die einem Beinelement (4) zugeordneten Gelenkelemente (5) jeweils ausschließlich zwei senkrecht zueinander angeordnete Drehachsen (DA) aufweisen, so dass die Gelenkelemente Schwenkbewegungen des jeweiligen Beinelements in genau zwei senkrecht zueinander stehenden Ebenen, die durch eine Längsachse des Beinelements verlaufen, erlauben und gleichzeitig eine Rotationsbewegung um eine Längsachse des Beinelements unterbinden.

2. Positioniervorrichtung nach Anspruch 1, **dadurch gekennzeichnet, dass** das Gelenkelement (5) als Kardangelenk (6) oder als Kreuzgelenk (7) ausgeführt ist.

3. Positioniervorrichtung nach Anspruch 1 oder 2, **dadurch gekennzeichnet, dass** sich die Drehachsen (DA) des Gelenkelements (5) nicht schneiden.

4. Positioniervorrichtung nach Anspruch 1, **dadurch gekennzeichnet, dass** das Gelenkelement (5) als Kugelgelenk (8) mit einem kugelförmigen Lagerkopf (9) und einer dazu komplementär geformten Lagerhülse (10), in welcher der Lagerkopf angeordnet ist, ausgebildet ist, wobei zwischen dem Lagerkopf und der Lagerhülse ein stiftförmiges Blockierelement (11) angeordnet ist, das in eine nutförmigen Ausnehmung (12) des Lagerkopfs hineinragt und mit dieser zusammenwirkt und in einer Ausnehmung (13) der Lagerhülse gelagert ist.

5. Positioniervorrichtung nach einem der vorhergehenden Ansprüche, **dadurch gekennzeichnet, dass** jedes Beinelement (4) einen Spindelantrieb aufweist.

## Claims

1. A positioning device (1) comprising a base (2) and a positioning element (3), which is adapted to be adjusted with respect to six degrees of freedom relative to the base, wherein the positioning element is coupled to the base via at least three pairs of length-variable and electrically driven leg elements (4), and each of the at least six leg elements is connected, at its two ends, to the base and the positioning element via an articulation element (5), wherein a respective pair of legs projects through another pair of legs and each pair of legs is arranged perpendicular to the respective other pairs of legs, **characterized in that** each of the articulation elements (5) associated with a leg element (4) has only two axes of rotation (DA), which are arranged perpendicular to each other, so that the articulation elements allow pivotal movements of the respective leg element in precisely two planes that are perpendicular to each other and run through a longitudinal axis of the leg element, and at the same time prevent a rotational movement about a longitudinal axis of the leg element.

2. The positioning device according to claim 1, **characterized in that** the articulation element (5) is configured as a cardan joint (6) or as a universal joint (7).

3. The positioning device according to claim 1 or 2, **characterized in that** the axes of rotation (DA) of the articulation element (5) do not intersect each other.

4. The positioning device according to claim 1, **characterized in that** the articulation element (5) is configured as a ball joint (8) comprising a spherical bearing head (9) and a complementarily shaped bearing sleeve (10), in which the bearing head is arranged, the bearing head and the bearing sleeve having arranged between them a pin-shaped blocking element (11), which projects into and cooperates with a groove-shaped recess (12) of the bearing head and which is supported in an opening (13) of the bearing sleeve.

5. The positioning device according to one of the preceding claims, **characterized in that** each leg element (4) is provided with a spindle drive.

## Revendications

1. Dispositif de positionnement (1) comprenant une base (2) et un élément de positionnement (3) réglable par rapport à la base selon six degrés de liberté, dans lequel l'élément de positionnement est couplé à la base par l'intermédiaire d'au moins trois paires d'éléments de pied (4) de longueur variable et entraînés électriquement, et chacun des au moins six éléments de pied est relié à la base et à l'élément de positionnement, à son extrémité respective, par l'intermédiaire d'un élément d'articulation (5), dans lequel une paire de pieds respective fait saillie à travers une autre paire de pieds, et chaque paire de pieds est agencée perpendiculairement aux autres paires de pieds respectives, **caractérisé en ce que** les éléments d'articulation (5) associés à un élément de pied (4) présentent respectivement uniquement deux axes de rotation (DA) agencés perpendiculairement l'un à l'autre, de sorte que les éléments d'articulation permettent des mouvements de pivotement de l'élément de pied respectif dans exactement deux plans perpendiculaires l'un à l'autre, qui s'étendent à travers un axe longitudinal de l'élément de pied, et empêchent simultanément un mouvement de rotation autour d'un axe longitudinal de l'élément de pied.

2. Dispositif de positionnement selon la revendication 1, **caractérisé en ce que** l'élément d'articulation (5) est réalisé sous la forme d'une articulation à cardan (6) ou d'une articulation en croix (7).

3. Dispositif de positionnement selon la revendication 1 ou 2, **caractérisé en ce que** les axes de rotation (DA) de l'élément d'articulation (5) ne se recoupent pas.

4. Dispositif de positionnement selon la revendication 1, **caractérisé en ce que** l'élément d'articulation (5) est réalisé sous la forme d'une articulation à rotule (8) avec une tête de palier (9) en forme de boule et une douille de palier (10) d'une forme complémentaire à celle-ci, dans laquelle est agencée la tête de palier, un élément de blocage (11) en forme de tige étant agencé entre la tête de palier et la douille de palier, qui pénètre dans un évidement (12) en forme de rainure de la tête de palier et coopère avec celle-ci et est logé dans un évidement (13) de la douille de palier.

5. Dispositif de positionnement selon l'une quelconque des revendications précédentes, **caractérisé en ce que** chaque élément de pied (4) présente un entraînement à broche.
